**Europäisches Patentamt**

**European Patent Office**

**Office européen des brevets**

(19)

(11) Veröffentlichungsnummer: **0 237 807 B1**

(12) **EUROPÄISCHE PATENTSCHRIFT**

(45) Veröffentlichungstag der Patentschrift:
09.10.91 Patentblatt 91/41

(21) Anmeldenummer: **87102181.2**

(22) Anmeldetag: **16.02.87**

(51) Int. Cl.⁵: **H04B 7/24,** H04B 7/155,
H04B 7/185, H04B 10/00,
H04J 14/00

(54) **Verfahren zum Übertragen von Informationen sowie Anwendungen.**

(30) Priorität: **18.02.86 DE 3605049**

(43) Veröffentlichungstag der Anmeldung:
**23.09.87 Patentblatt 87/39**

(45) Bekanntmachung des Hinweises auf die
Patenterteilung:
**09.10.91 Patentblatt 91/41**

(84) Benannte Vertragsstaaten:
**DE FR GB IT NL SE**

(56) Entgegenhaltungen:
EP-A- 0 082 037
US-A- 4 375 097
US-A- 4 381 562
PATENT ABSTRACTS OF JAPAN, Band 8, Nr.
91 (E-241)[1528], 26. April 1984; & JP-A-59 10
043

(73) Patentinhaber: **ANT Nachrichtentechnik
GmbH
Gerberstrasse 33
W-7150 Backnang (DE)**

(72) Erfinder: **Sperlich, Josef, Dipl.-Ing.
Kelterweg 52
W-7150 Backnang (DE)**

**Beschreibung**

Die Erfindung betrifft Verfahren gemäß dem Oberbegriff des Anspruchs 1. Eine Satelliten-Übertragungsnetz, das nach einem solchen Verfahren arbeitet, ist bekannt aus US-A-4,381.562.

Beim Satelliten-Übertragungsnetz gemäß US-A-4,381,562 werden die vom Satelliten empfangenen Informationen zwischengespeichert und in einem vorbestimmten Format im nächsten Rahmen wiederausgesendet.

Aus der DE-A-32 02 656 ist eine Satelliten-Relaisstation bekannt mit einem Empfangs-Zeitsteuer-Detektor für die Messung der Rahmen-Zeitsteuerung jedes Informationssignals in Verbindung mit einer Signal-Speicherschaltung. Zur Signalverarbeitung ist eine Steuervorrichtung für die Steuerung der Speicheroperationen der Signal-Speicherschaltung vorhanden. Das Satelliten-Nachrichtenübertragungssystem gemäß DE 32 02 656 A1 besteht aus einer Erdstation und ein oder mehreren Relaisstationen in Form von Satelliten.

Aus der DE-B-19 23 744 ist ein funkgebundenes Nachrichtenübertragungssystem bekannt mit einer Relaisstation im erdnahen Luftraum. Diese Relaisstation erfüllt gleichzeitig die Aufgaben einer Zentralstation, d.h. in diesem Falle Organisation des Funkverkehrs. Durch ein Aufrufsignal der Zentralstation werden die Informationen der Teilnehmerstationen zeitlich versetzt abgerufen.

Es ist aus der DE-A-34 20 917 ein Punkt zu Multipunkt-Richtfunknetz bekannt, wobei unter Zugrundelegen der Zeitmultiplextechnik eine Verbindung im Burstmode zwischen einer Zentralstation und Teilnehmerstationen erfolgt. Alle von der Zentralstation empfangenen Signale werden im Zeitmultiplex in einer anderen Frequenzlage wieder an die Teilnehmerstationen abgestrahlt. Die vermittlungstechnischen Funktionen werden durch organisatorische Maßnahmen auf der Teilnehmerseite erbracht.

Die EP-A-0 082 037 beschreibt ein digitales Übertragungssystem zwischen mehreren Teilnehmern unter Verwendung einer optischen Busstruktur. Der Busbetrieb wird von einer zentralen Steuerung verwaltet. Adressinformationen sind den Teilnehmermeldungen vorangestellt, die in der zentralen Steuerung ausgewertet und bedarfsweise gespeichert werden.

Schließlich ist in der europäischen Patentanmeldung Veröffentlichungsnummer 0 166 892 A1 ein TDMA Punkt zu Mehrpunkt-Übertragungssystem mit einer Zentralstation und mehreren Unterstationen beschrieben, bei dem auch eine Mehrfachausnutzung des Übertragungsbandes erfolgt. Dazu werden im TDMA-Rahmen Bursts von der Zentralstation aus an die Unterstationen gesendet, und zwar zuerst an die bezüglich der Zentralstation am weitesten entfernte Unterstation und zuletzt an die nächstgelegene Unterstation. Die Aussendung der Bursts der Unterstationen an die Zentralstation erfolgt in umgekehrter Reihenfolge. Durch diesen Rahmenaufbau treten nur kurze Pausen zwischen den Sende- und Empfangszyklen auf.

Der Erfindung liegt die Aufgabe zugrunde, ein Verfahren gemäß dem Oberbegriff des Patentanspruchs 1 anzugeben, welches für den terrestrischen Bereich geeignet ist und bei welchem die Übertragungszeit besser organisiert ist. Außerdem sollen Anwendungen dieses Verfahrens aufgezeigt werden.

Diese Aufgabe wird bezüglich des Verfahrens gelöst wie im Kennzeichen des Anspruchs 1 beschrieben. Die Ansprüche 2 bis 4 betreffen Ausgestaltungen des Verfahrens und die Ansprüche 5 bis 8 vorteilhafte Anwendungen bzw. deren Weiterbildungen.

Im folgenden wird die Erfindung anhand von Ausführungsbeispielen mit Hilfe von Figuren näher beschrieben.

Figur 1 zeigt eine prinzipielle Anordnung eines Übertragungsnetzes mit Zentralstation ZSt, Teilnehmerstationen PSt und Umsetzer U.

Figur 2 zeigt ein Blockschaltbild eines erfindungsgemäßen Übertragungsnetzes.

Figur 3 zeigt ein Blockschaltbild eines erfindungsgemäßen Übertragungsnetzes mit Funkübertragung.

Figur 4 zeigt ein Blockschaltbild eines erfindungsgemäßen Übertragungsnetzes mit Übertragung über Glasfasern.

Figur 5 zeigt ein Blockschaltbild eines erfindungsgemäßen Übertragungsnetzes mit kombinierter Funk- und Glasfaserübertragung.

Figur 6 zeigt einen Rahmenaufbau bei Anordnungen nach Figur 3 bis 5 wie er im Verstärker V auftritt.

Figur 7 zeigt das Blockschaltbild eines Verstärkers V für Zweidrahtbetrieb.

Figur 8 zeigt einen Rahmenaufbau bei Zweidrahtbetrieb.

Figur 9 zeigt die Laufzeitbedingungen.

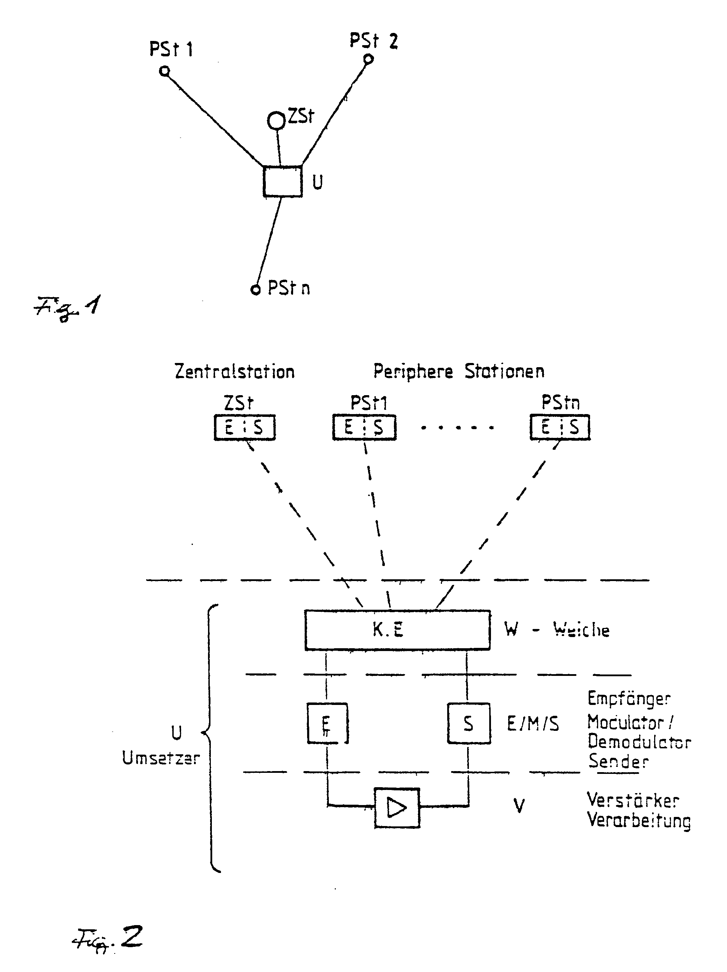

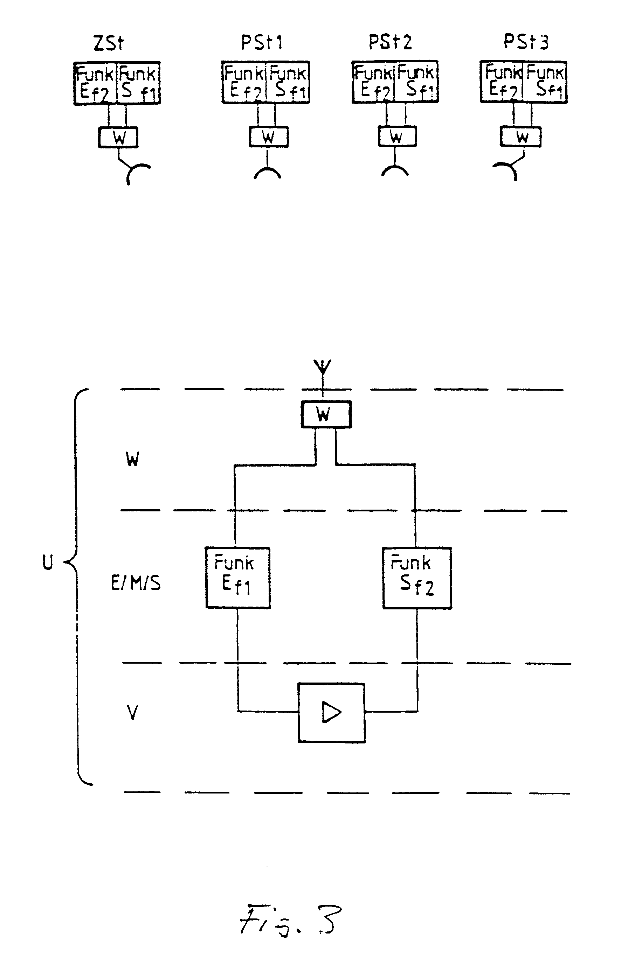

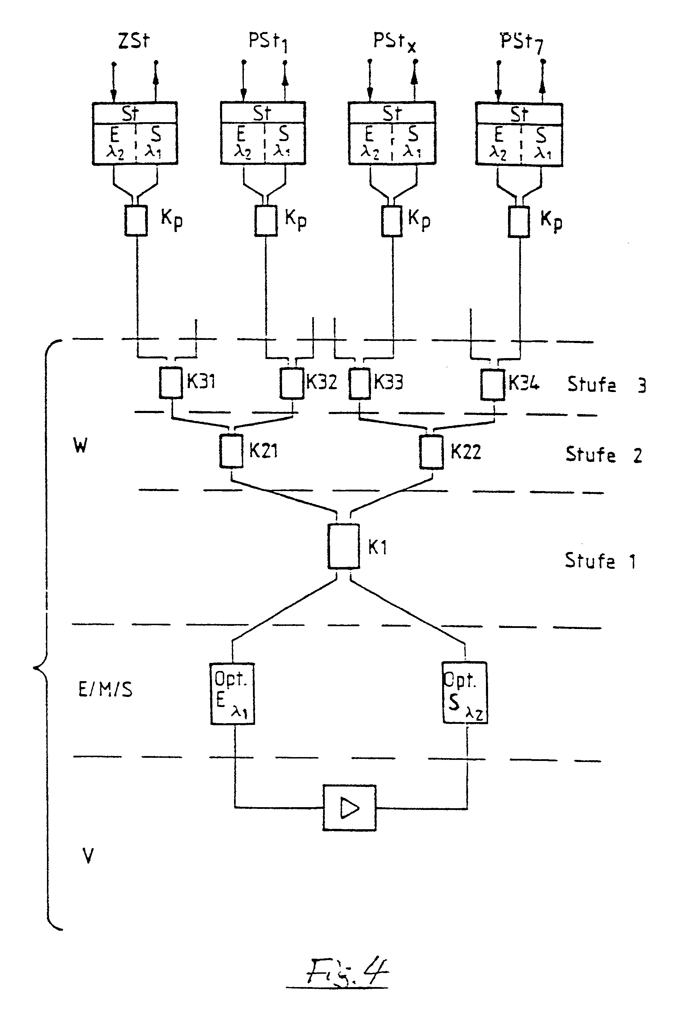

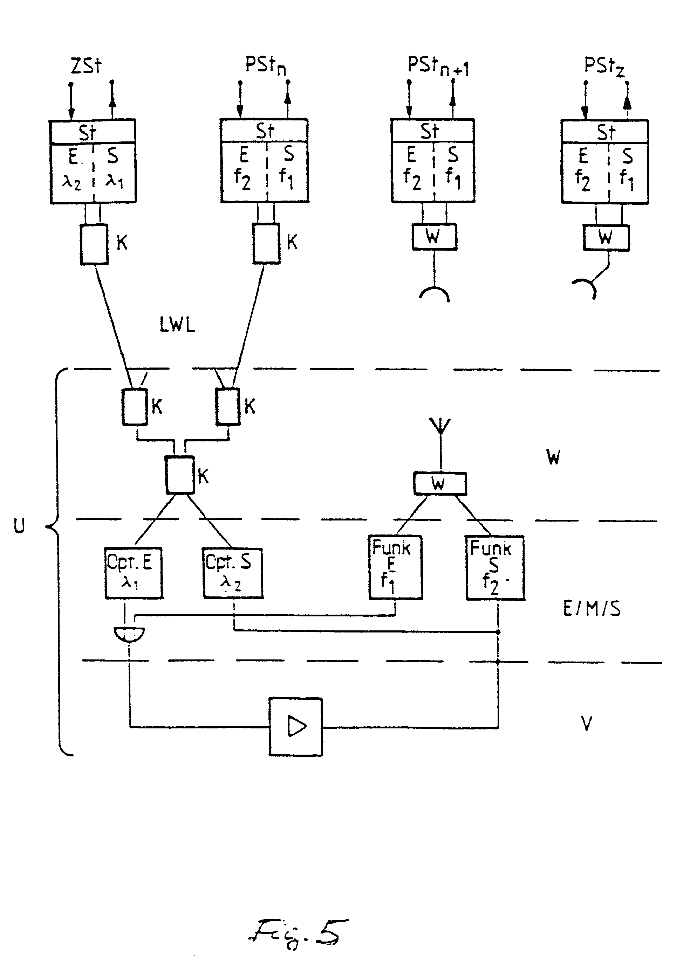

Für das erfindungsgemäße Verfahren ist ein Netz mit Funkgeräten wie ein Satellitennetz mit mehreren Bodenstationen (=PSt) und einer Leitstation (=ZSt) vorgesehen. Der Betrieb erfolgt im TDMA-Verfahren (Figur 2 und Figur 3). Die gleiche Anordnung kann aber terrestrisch auch leitergebunden betrieben werden. Ein solches Netz ist in Figur 4 mit Glasfaserübertragung dargestellt. Dabei sind als Koppelelemente passive optische Koppler (Schweißkoppler) verwendet.

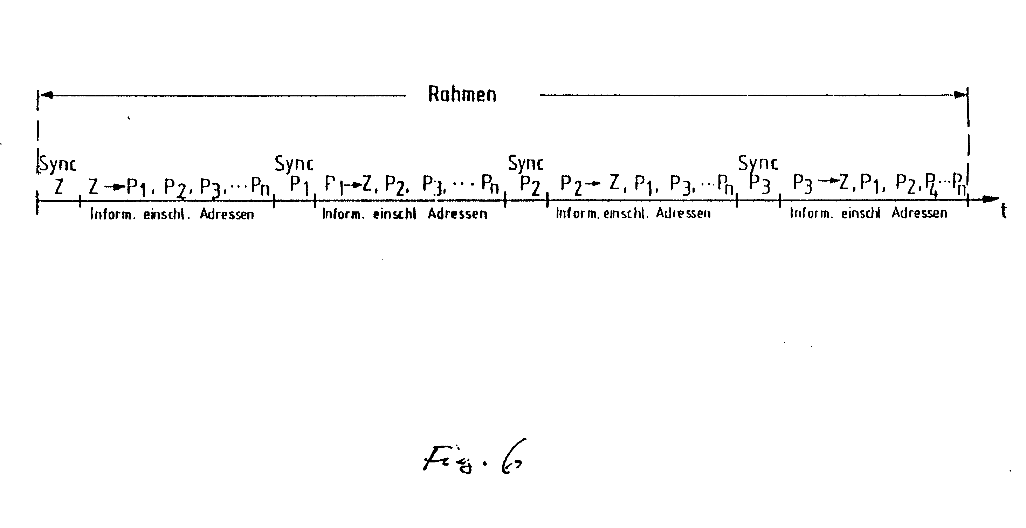

Für das in Figur 5 dargestellte kombinierte Netz mit funk- und leitergebundener Übertragung ist es besonders wichtig, daß die Zentralstation beim laufzeitvorhalt für die einzelnen Stationen die spezifische Laufzeit ($\varepsilon$) des jeweiligen Übertragungsmediums berücksichtigt.

Vorteilhaft ist die Verwendung einer Relaisstation, nachfolgend mit Umsetzer U bezeichnet, in einem solchen terrestrischen Netz besonders dann, wenn der Umsetzer an einem exponierten Ort angebracht ist.

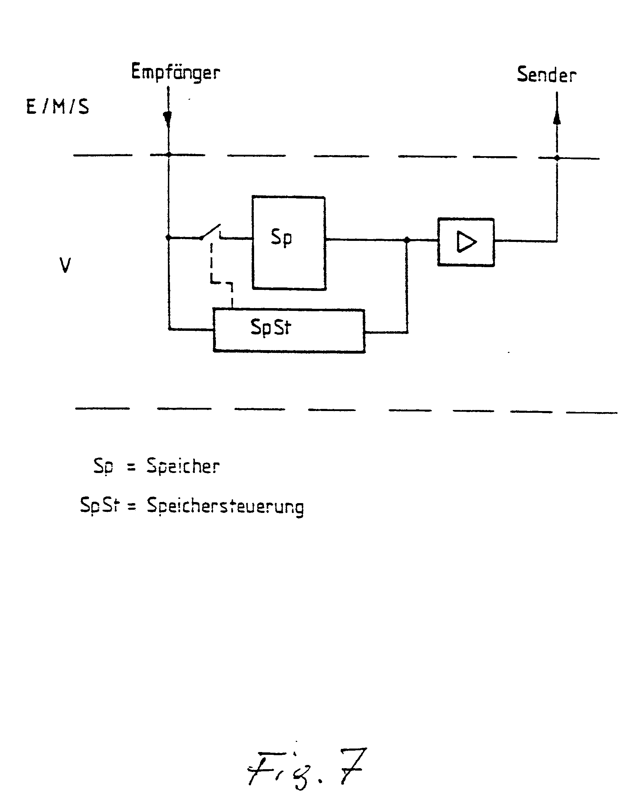

Die Figuren 3, 4 und 5 beziehen sich zunächst auf Vierdrahtübertragung mit unterschiedlichen Frequenzen bzw. Lichtwellenlängen für die Hin- und Rückrichtung. Dabei kann ein Rahmenaufbau wie bei Satelliten TDMA-System (siehe Figur 6) gewählt werden.

Beim Vierdrahtbetrieb über Funk (Fig. 3) sind alle Sender S und Empfänger E Funkempfänger.

Die Zentraltionen ZSt und die peripheren Teilnehmerstationen PSt senden mit der Frequenz $f_1$ und empfangen auf der Frequenz $f_2$. Der Umsetzer U sendet mit der Frequenz $f_2$ und empfängt die Frequenz $f_1$.

Im Umsetzer, in der Zentralstation und in den peripheren Teilnehmerstationen werden die bekannten üblichen Frequenzweichen verwendet.

Die Zentralstation gibt den Rahmen vor. Im Burst jeder Station ist die Information an die jeweiligen anderen Stationen, sowie die jeweilige Adresse enthalten.

Beim Vierdrahtbetrieb über Lichtwellenleiter LWL (Figur 4) sind alle Sender und Empfänger durchweg optische Sender und Empfänger in Verbindung mit elektro-optischen Wandlern.

Die Zentralstation ZSt und die peripheren Teilnehmerstationen PSt senden Licht mit der Wellenlänge λ1 und empfangen Licht mit der Wellenlänge λ2.
Der Umsetzer sendet Licht mit der Wellenlänge λ2 und empfängt Licht mit der Wellenlänge λ1.

Als Koppelelemente in der Zentralstation, der peripheren Teilnehmerstation und im Umsetzer werden passive optische Koppler (Schweißkoppler) verwendet. Dabei sind die Koppelelemente im Umsetzer hierarchisch, d. h. eine Reihenschaltung mit verschiedenen Stufen, aufgebaut (siehe Figur 4).

Die Zentralstation ZSt gibt auch in diesem Fall den Rahmen vor.

Beim Vierdrahtbetrieb über eine kombinierte Funk- und Lichtwellenleiter LWL-Übertragung gibt auch die Zentralstation ZSt den Rahmen vor. Dabei muß für den Sendebeginn der einzelnen Stationen besonders auf die verschiedenen Laufzeiten der verschiedenen Übertragungsmedien Rücksicht genommen werden.

Der Umsetzer hat allgemein die Funktion wie ein Satellit, jedoch wahlweise oder kombiniert mit Funk- und/oder Lichtwellenleiter LWL-Schnittstellen. Für andere leitergebundene Netze werden entsprechend übliche Schnittstellen verwendet.

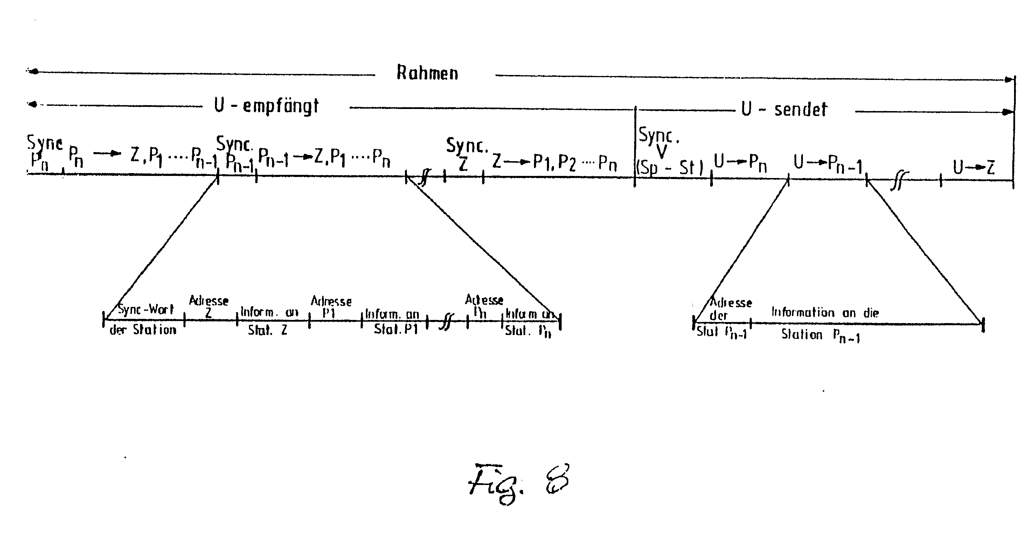

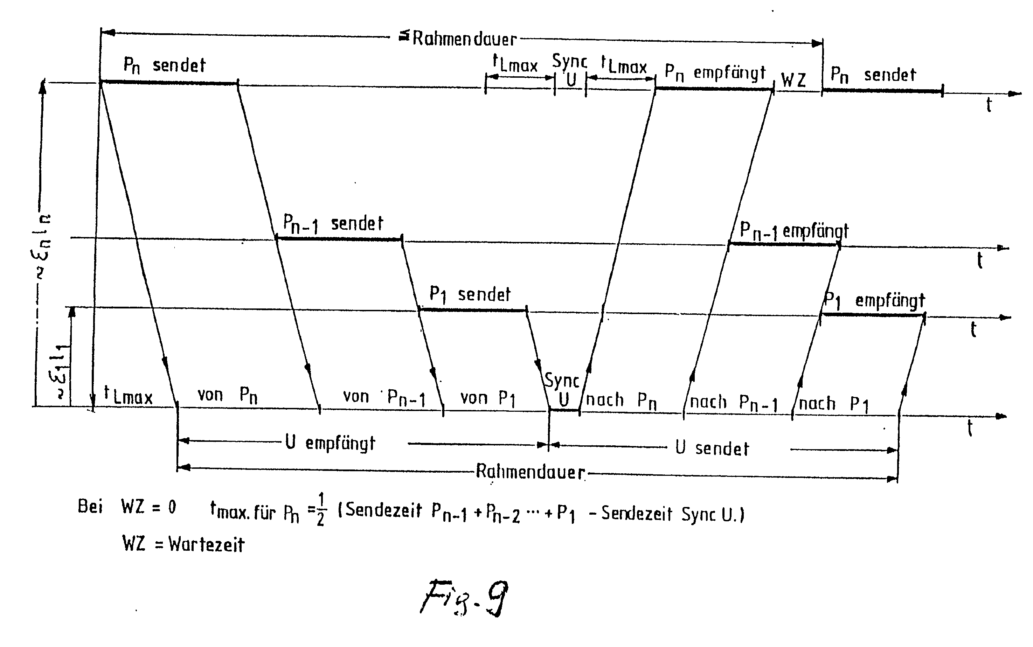

Beim Zweidrahtbetrieb ist das Netz im Prinzip genauso aufgebaut wie in den Figuren 3, 4 und 5 dargestellt, jedoch ist der Verstärker V im Umsetzer U gemäß Fig. 7 aufgebaut und der Rahmen ist gemäß Fig. 8 organisiert.

Alle Sender und Empfänger benutzen in diesem Fall gleiche Funkfrequenzen bzw. gleiche Lichtwellenlängen.

Alle peripheren Sender, einschließlich des Senders der Zentralstation ZSt beginnen ihren Burst mit einem Synchronwort. Das Synchronwort von der Zentralstation ZSt enthält zusätzlich Angaben für die Speichersteuerung Sp-St im Umsetzer U gemäß Fig. 7 und zwar insbesondere Angaben über den Rahmenaufbau und dessen Veränderungen.

Der Speicher Sp im Umsetzer gemäß Fig. 7 ist in so viele Bereiche unterteilt wie Stationen angeschlossen sind und zwar Zentralstation einschließlich aller peripheren Teilnehmerstationen.
Jeder Bereich enthält in den ersten Zellen die Adresse der peripheren Teilnehmerstationen oder der Zentralstation ZSt an welche die in dem Bereich stehende Information gerichtet ist. Die Steuerung verteilt die im Umsetzer empfangene Information von den einzelnen Stationen in der Weise, daß in jeden Bereich des Speichers nur Information für eine Bestimmungsstation enthalten ist. Während der Sendezeit des Umsetzers wird der Speicher kontinuierlich über alle Adressen ausgelesen.
Im Synchronwort Sp-St (siehe Fig. 8) gibt die Speichersteuerung Rückmeldung an die Zentralstation ZSt durch. Die Anweisungen von der Zentralstation ZSt an die einzelnen peripheren Teilnehmerstationen werden in einem anderen Synchronwort Z an die Speichersteuerung Sp-St gegeben und von dieser über das Synchronwort Sp-St an die peripheren Teilnehmerstationen PSt weitergeleitet.

Wie in Figur 7 dargestellt, ist die Erweiterung der Umsetzerstation im Verstärkerbereich durch einen Speicher und eine Speichersteuerung für den Zweidrahtbetrieb besonders zweckmäßig.

Der Speicher in der Umsetzerstation ordnet die von den Stationen kommenden Informationen so um, daß in Senderichtung vom Umsetzer zu den einzelnen Stationen bereits die Informationen aller Stationen zusammenhängend wiederausgesendet werden. Dadurch wird Adress- und Übertragungskapazität eingespart und die Sendezeit für den Umsetzer U wird kürzer als die Empfangszeit.

In Figur 9 ist dargestellt, mit welchem Zeitvorhalt die unterschiedlich weit vom Umsetzer U entfernten Stationen unter Berücksichtigung der eventuell unterschiedlichen Übertragungsmedien senden müssen und wann sie "ihren" Burst empfangen. Auch ist die maximale zulässige Laufzeit für die am weitesten entfernte Station angegeben.

Das Verfahren gemäß der Erfindung ist mit einer oder mehreren Relaisstation/en (U), die geographisch fest oder beweglich an der Erdoberfläche oder im erdnahen Luftraum angeordnet ist/sind, durchführbar.

Im Falle eines Funkübertragungsnetzes kann/können die Relaisstation/en (U) in Ballons, Hubschraubern oder ähnlichen Luftfahrzeugen untergebracht sein.

**Patentansprüche**

1. Verfahren zum Übertragen von Informationen über ein Übertragungsnetz, bei dem die einzelnen Teilnehmerstationen (PSt1 ... PStn) über eine Zentralstation (ZSt) und eine oder mehrere Relaisstationen (U) miteinander in Verbindung treten, wobei die Relaisstation/en (U) in einer geographisch günstigen Position angeordnet ist/sind, wobei die Übertragung nach dem TDMA-Verfahren unter Berücksichtigung der verschiedenen Laufzeiten des Übertragungsmediums erfolgt, wobei ein Speicher (Sp) mit einer Speichersteuerung (SpSt) im der/den Relaisstation/en (U) vorgesehen ist und wobei der Speicher jeder Relaisstation (U) in soviele Bereiche unterteilt ist, wie Teilnehmerstationen (Pst ... PStn) angeschlossen sind, gekennzeichnet durch

    – Unterteilen jedes Bereiches in Zellen,

    – Einlesen der Adressen der Teilnehmerstationen (PSt1 ... PStn) oder der Zentralstation (ZSt) in die jeweils ersten Zellen, an welche die in dem entsprechenden Bereich stehende Information gerichtet ist,

    – Umordnen der von jeder der Teilnehmerstationen (PSt1 ... PStn) zu der/den Relaisstation/en (U) gesendeten Informationen mittels des Speichers (Sp) und der Speichersteuerung (SpSt) in der Weise, daß in jedem Bereich nur Informationen für einen Bestimmungsort enthalten sind,

    – kontinuierliches Auslesen des Speichers (Sp) einer Relaisstation (U) über alle Adressen für die Wiederaussendung der Informationen,

    – Wiederaussenden der Informationen aller Teilnehmerstationen (PSt1 ... PStn) durch die Zentralstation (ZSt) in einem Senderahmen derart, daß jede Teilnehmerstation (PSt1 ... PStn) die für sie bestimmte Information zusammenhängend erhält.

2. Verfahren nach Anspruch 1, gekennzeichnet durch burstweises Übertragen der Information.

3. Verfahren nach Anspruch 2, gekennzeichnet durch Übertragen im Halbduplex-Betrieb und Benutzen der gleichen Frequenz- bzw. Wellenlänge für beide Übertragungsrichtungen.

4. Verfahren nach Anspruch 2 oder 3, gekennzeichnet durch Übertragen eines Synchronwortes am Anfang jedes Burst aller Teilnehmerstationen (PSt1 ... PStn), welches zusätzliche Angaben für die Speichersteuerung (SpSt) über den Rahmenaufbau und dessen Veränderung enthält.

5. Anwendung des Verfahrens nach einem der Ansprüche 1 bis 4 zur funk- oder leitergebundenen oder zur kombinierten funk- und leitergebundenen Übertragung.

6. Anwendung nach Anspruch 5 mit einer oder mehreren Relaisstation/en (U), die geographisch fest oder beweglich an der Erdoberfläche oder im erdnahen Luftraum angeordnet ist/sind.

7. Anwendung nach Anspruch 6 für ein Funkübertragungsnetz, dessen Relaisstation/en (U) in Ballons, Hubschraubern oder ähnlichen Luftfahrzeugen untergebracht ist/sind.

8. Anwendung des Verfahrens nach Anspruch 1 für ein Leitungsübertragungsnetz, bestehend aus Glasfasern mit passiven optischen Kopplern als Koppelelementen und hierarchischer Anordnung der Koppler in der/den Relaisstation/en (U).

**Claims**

1. Method for the transmission of information by way of a transmission network, in which the individual subscriber stations (PSt1 to PStn) enter into connection one with the other by way of an exchange station (ZSt) and one or more relay stations (U), wherein the or each relay station (U) is arranged in geographically favourable position, wherein the transmission takes place by the time-division multiplex method subject to consideration of the different transit times of the transmission medium, wherein a store (Sp) with a storage control (SpSt) is provided in the or each relay station (U) and wherein the store of each relay station (U) is divided into as many regions as there are subscriber stations (PSt1 and PStn) connected, characterised by

    – subdivision of each region into cells,

    – entry of the addresses of the subscriber stations (PSt1 to PStn) or of the exchange station (ZSt) into the respective first cells, to which the information standing in the corresponding range is directed,

    – re-arranging the information sent by each of the subscriber stations (PSt1 to PStn) to the or each relay station (U) by means of the store (Sp) and the storage control (SPSt) in such a manner that information for only one destination is contained in each region,

    – continuous reading-out of the store (Sp) of a relay station (U) by way of all addressed for the re-emission of the information,

    – re-emission of the information of all subscriber stations (PSt1 to PStn) through the exchange station (ZSt) in a transmission frame in such a manner that each of the subscriber stations (PSt1 to PStn) contiguously receives the information intended for it.

2. Method according to claim 1, characterised by transmission of the information in bursts.

3. Method according to claim 2, characterised by transmission in semiduplex operation and utilisation of the same frequency or wavelength for both directions of transmission.

4. Method according to claim 2 or 3, characterised by transmission of a synchronising word at the start of each burst of all subscriber stations (PSt1 to PStn), which word contains additional statements, which are about the frame build-up and changes in it, for the storage control (SpSt).

5. Application of the method according to one of the claims 1 to 4 to the wireless or wire-bound transmission or to the combined wireless and wire-bound transmission.

6. Application according to claim 5 with one or more relay stations (U) arranged to be fixed geographically or to be movable on the surface of the earth or in the air space near to the earth.

7. Application according to claim 6 to a radio transmission network, the or each relay station (U) of which is housed in either a balloon or a helicopter or similar aircraft.

8. Application of the method according to claim 1 to a line transmission network consisting of glass fibres with passive optical couplers as coupling elements and hierarchic arrangement of the couplers in the or each relay station (U).

**Revendications**

1. Procédé de transmission d'informations via un réseau de transmission, dans lequel les stations individuelles de participants (PSt1 ... PStn) entrent en relation mutuelle via une station centrale (ZSt) et via une ou plusieurs station(s)-relais (U), la ou les station(s)-relais (U) étant agencée(s) à une position géographiquement favorable, la transmission s'effectuant selon le procédé multiplex à partage de temps, en tenant compte des différents temps de transit du milieu de transmission, une mémoire (Sp) avec commande de mémoire (SpSt) étant prévue dans la ou les station(s)-relais (U), et la mémoire de chaque station-relais (U) étant subdivisée en autant de domaines qu'il y a de stations de participants raccordées (PSt1 ... PStn), caractérisé par
— la subdivision de chaque domaine en cellules,
— la mise en mémoire des adresses des stations de participants (PSt1 ... PStn), ou de la station centrale (ZSt), dans les premières cellules vers lesquelles l'information présente dans le domaine correspondant est dirigée,
— reclassement des informations envoyées par chacune des stations de participants (PSt1 ... PStn) à la ou aux station(s)-relais (U), au moyen de la mémoire (Sp) et de la commande de mémoire (SpSt), cela de manière que chaque domaine ne contienne que des informations pour un lieu de destination,
— lecture continuelle de la mémoire (Sp) d'une station-relais (U), sur toutes ses adresses, pour la réémission des informations,
— réémission des informations de toutes les stations de participants (PSt1 ... PStn) par la station centrale (ZSt), cela dans une trame d'émission, de façon telle que chaque station de participant (PSt1 ... PStn) reçoive de manière cohérente l'information qui lui est destinée.

2. Procédé selon revendication 1, caractérisé par la transmission de l'information par paquets de signaux.

3. Procédé selon la revendication 2, caractérisé par la transmission en semi-duplex et, par l'utilisation des mêmes fréquences ou longueurs d'ondes pour les deux sens de transmission.

4. Procédé selon revendication 2 ou 3, caractérisé par la transmission d'un mot de synchronisation au début de chaque paquet de signaux de toutes les stations de participants (PSt1 ... PStn), ce mot contenant des indications supplémentaires pour la commande de mémoire (SpSt), concernant la structure de trame et sa modification.

5. Utilisation du procédé selon l'une des revendications 1 à 4, pour la transmission par voie hertzienne ou par câble(s), ou pour la transmission combinant voie hertzienne et câble(s).

6. Utilisation selon la revendication 5, avec une ou plusieurs station(s)-relais (U) qui est(sont) agencée(s) fixe(s) ou mobile(s) à la surface de la terre, ou dans l'espace proche de la terre.

7. Utilisation selon revendication 6, pour réseau de transmission hertzien dont la ou les station(s)-relais (U) est(sont) installée(s) dans un ou des ballon(s), hélicoptère(s) ou appareil(s) volant(s) analogue(s).

8. Utilisation du procédé selon revendication 1 avec un réseau de transmission par câble, constitué de fibres de verre avec des coupleurs optiques passifs en tant qu'éléments de couplage, et avec agencement hiérarchisé des coupleurs dans la ou les station(s)-relais (U).

PSt 1    PSt 2

ZSt

U

PSt n

Fig. 1

Zentralstation        Periphere Stationen

ZSt              PSt1                    PStn
E : S           E : S      . . . . .    E : S

K.E          W - Weiche

E          S      E/M/S    Empfänger
                          Modulator /
                          Demodulator
                          Sender

U                         V        Verstärker
Umsetzer                           Verarbeitung

Fig. 2

6

Fig. 3

Fig. 4

Fig. 5

Rahmen

Sync | Z → P₁, P₂, P₃, ... Pₙ

Inform. einschl. Adressen

Sync | P₁ → Z, P₂, P₃, ... Pₙ

Inform. einschl. Adressen

Sync | P₂ → Z, P₁, P₃, ... Pₙ

Inform. einschl. Adressen

Sync | P₃ → Z, P₁, P₂, P₄ ... Pₙ

Inform. einschl. Adressen

t

Fig. 6

Empfänger                                      Sender

E / M / S

V

Sp

SpSt

Sp  = Speicher

SpSt = Speichersteuerung

Fig. 7

Fig. 8

Rahmen

U – empfängt

Sync. P_n → Z, P1 ... P_{n-1} P_{n-1} | Sync. P_{n-1}, P_{n-1} → Z, P1 ... P_n

Sync. Z, Z → P1, P2 ... P_n

Sync-Wort der Station | Adresse Z | Inform. an Stat. Z | Adresse P1 | Inform. an Stat. P1 | Adresse P_n | Inform. an Stat. P_n

Sync. V (Sp – St)

U – sendet

U → P_n | U → P_{n-1} | U → Z

Adresse der Stat P_{n-1} | Information an die Station P_{n-1}

Bei WZ = 0    $t_{max.}$ für $P_n = \frac{1}{2}$ (Sendezeit $P_{n-1} + P_{n-2} \cdots + P_1$ − Sendezeit Sync U.)

WZ = Wartezeit